# EUROPEAN PATENT APPLICATION

(11) **EP 4 621 406 A1**
(43) Date of publication of application: **24.09.2025**
(21) Application number: 25163724.5
(22) Date of filing: 14.03.2025
(51) Int. Cl.: G01N 30/26, G01N 30/16, G01N 30/74

(54) **DETECTING A BUBBLE IN A FLUID PATH**

(30) Priority: 19.03.2024 GB 202403912
(71) Applicant: Agilent Technologies, Inc., Santa Clara, CA 95051 (US)
(72) Inventor: KEPPLER, Christoph, 76337 Waldbronn (DE)
(74) Representative: Dilg, Haeusler, Schindelmann Patentanwaltsgesellschaft mbH

(57) **Abstract**

There is described a method for detecting a bubble (150), in particular a gas bubble, in an analytical device (10), the method comprising:
i) detecting in a fluid path an electromagnetic signal (110) in response to a provided flow/pressure signal (120); and
ii) determining the presence of the bubble (150) in the fluid path based on the detected electromagnetic signal (110).

## Description

### FIELD OF THE DISCLOSURE

The present disclosure relates to a method for detecting a bubble in a fluid path, in particular a fluid path of an analytical device (e.g. a HPLC). The method comprises detecting in the fluid path an electromagnetic signal in response to a provided flow/pressure signal, and determining the presence of the bubble in the fluid path based on the detected electromagnetic signal. The present disclosure further relates to a device that comprises a pressurizing device, an electromagnetic signal detector, and a control device, e.g. configured to perform said method. Further, the present disclosure refers to an analytical device, in particular a chromatography device such as a high performance liquid chromatography (HPLC) device, that comprises said device and an analytical domain.

### BACKGROUND ART

Analytical devices are provided for analysing a sample, such as for carrying out a chromatographic separation of the sample.

For example, for liquid separation in a chromatography system, a mobile phase comprising a sample fluid (e.g. a chemical or biological mixture) with compounds to be separated is driven through a stationary phase (such as a chromatographic column packing), thus separating different compounds of the sample fluid which may then be identified.

The mobile phase, typically comprised of one or more solvents, is pumped under high-pressure typically through a chromatographic column containing packing medium (also referred to as packing material or stationary phase). As the sample is carried through the column by the liquid flow, the different compounds, each one having a different affinity to the packing medium, move through the column at different speeds. Those compounds having greater affinity for the stationary phase move more slowly through the column than those having less affinity, and this speed differential results in the compounds being separated from one another as they pass through the column. The stationary phase is subject to a mechanical force generated in particular by a hydraulic pump that pumps the mobile phase usually from an upstream connection of the column to a downstream connection of the column. As a result of flow, depending on the physical properties of the stationary phase and the mobile phase, a relatively high-pressure drop is generated across the column.

The mobile phase with the separated compounds exits the column and passes through a detector, which registers and/or identifies the molecules, for example by spectrophotometric absorbance measurements. A two-dimensional plot of the detector measurements against elution time or volume, known as a chromatogram, may be made, and from the chromatogram the compounds may be identified. For each compound, the chromatogram displays a separate curve feature also designated as a "peak".

In preparative chromatography systems, a liquid as the mobile phase is provided usually at a controlled flow rate (e. g. in the range of 1 mL/min to thousands of mL/min, e.g. in analytical scale preparative LC in the range of 1 - 5 mL/min and preparative scale in the range of 4 - 200 mL/min) and at pressure in the range of tens to hundreds bar, e.g. 20 - 600 bar.

In high performance liquid chromatography (HPLC), a liquid as the mobile phase has to be provided usually at a very controlled flow rate (e.g. in the range of microliters to milliliters per minute) and at high-pressure (typically 20-100 MPa, 200-1000 bar, and beyond up to currently 200 MPa, 2000 bar) at which compressibility of the liquid becomes noticeable.

Such analytical devices generally have to analyze samples in a highly accurate manner. Thus, every source of disturbance for the measurement quality has to be identified and removed. A particular issue with respect to a precise measurement may be seen in the presence of gas bubbles in a fluid path. For example, an air bubble can occur in a liquid solvent and disturb the measurement. Such an issue may be especially problematic, when the gas bubble is located in the detector of the analytical device, thereby directly disturbing the measurement result and eventually also damaging the instrument.

Various sources of gas bubbles exist within the flow path of an analytical device such as a HPLC. Frequent sources of bubbles may include dissolved air, the solvent itself, leaks, trapped air during installation, etc. For example, gas can form bubbles in the flow path, whereas the radius of said bubbles can be dependent on the pressure of the surrounding fluid and its viscosity.

Analytical devices, such as a HPLC, can apply a detector flow cell which typically consists of a detection volume which is often larger in diameter compared to capillaries of the analytical device and constitutes a compromise between optical constraints and sensitivity on the one hand and minimum added dispersion on the other hand. However, bubbles may be easily trapped in this detection volume, which then constitutes a temporary location for unimpeded bubble expansion.

The presence of such a bubble, in particular in the detection volume (of the flow cell), may impact the optical detection in many ways, for example: reduction of effective detector (flow cell) volume, static deflection of normal ray path, dynamic deflection of normal ray path, reflection at phase transition (especially problematic for fluorescence detection), pressure dependent breathing of the bubble (visibility of pump strokes), arbitrary movement of bubble in detector flow cell volume caused by turbulent currents with subsequent modulation of light path. The effects mentioned above may affect/yield for example quantification errors, noise, or pressure ripples.

Hence, the presence of a bubble in a flow path of an analytical device may lead to significant drawbacks regarding the quality of the analysis. Conventionally, a bubble detection can be based for example on the circumstance that bubbles usually have a low wavelength dependency, which may be found by evaluating spectra. However, the conventional methods require additional efforts (e.g. a bubble detector), while the criteria for the presence of a bubble are rather weak.

### SUMMARY OF THE DISCLOSURE

There may be a need to detect the presence of a bubble in a fluid path (in an analytical device) in an efficient and reliable manner. The object is solved by the independent claims. Further embodiments are shown by the dependent claims.

According to an aspect of the invention, there is described a method for detecting a bubble (in particular a gas bubble such as an air bubble) in an analytical device (e.g. a HPLC) (in particular in a detection volume), the method comprising:
i) detecting in a fluid path (in particular in the (fluorescence) detector of the analytical device) an electromagnetic signal (in particular an optical signal) in response to a provided flow/pressure signal (e.g. provided by a pressurizing device such as a pump); and
ii) determining the presence of the bubble in the fluid path based on the detected electromagnetic signal (in particular because the bubble responds with a contraction and expansion to the pressure signal).

According to a further aspect of the invention, there is described a device, comprising: i) a pressurizing device (in particular a pump or a metering device), configured to provide a flow/pressure signal to a fluid path; ii) an electromagnetic signal detector (e.g. a fluorescence detector), configured to detect in the fluid path an electromagnetic signal in response to the provided pressure signal; and iii) a control device, configured to determine the presence of a bubble in the fluid path based on the detected electromagnetic signal.

According to a further aspect of the invention, there is described an analytical device, comprising: the device as described above; and an analytic domain, in particular a chromatographic domain, coupled to the device and configured to analyze a fluidic sample.

In the context of the present document, the term "analytical device" may in particular refer to a device suitable to perform an analysis of a sample. In an example, the analytical device is applied to analyze (characterize) a sample by sample separation (such as chromatography). In the context of the present document, the term "chromatography device" may in particular refer to an instrument suitable to perform a chromatographic analysis, preferably for analysing a sample, such as for carrying out a chromatographic separation of the sample. Examples of an analytical device may include a liquid chromatography (LC) instrument, in particular a high performance liquid chromatography instrument (HPLC) or a ultra-high performance liquid chromatography instrument (UHPLC), an electrophoresis system, a microfluidic device, a cell sorter (e.g. FACS - Fluorescence Activated Cell Sorting), or a spectrophotometer. In an embodiment, the analytical device comprising an (optical) detection device coupled to or couplable to a source of pressure.

In the context of this application, the term "fluidic sample" may particularly denote any liquid and/or gaseous medium, optionally including also solid particles, which is to be analyzed. Such a fluidic sample may comprise a plurality of fractions of molecules or particles which shall be separated, for instance small mass molecules or large mass biomolecules such as proteins. Separation of a fluidic sample into fractions may involve a certain separation criterion (such as mass, volume, chemical properties, etc.) according to which a separation is carried out.

In the context of this application, the term "mobile phase" may particularly denote any liquid and/or gaseous medium which may serve as fluidic carrier of the fluidic sample during separation. A mobile phase may be a solvent or a solvent composition (for instance composed of water and an organic solvent such as ethanol or acetonitrile). In an isocratic separation mode of a liquid chromatography apparatus, the mobile phase may have a constant composition over time. In a gradient mode, however, the composition of the mobile phase may be changed over time, in particular to desorb fractions of the fluidic sample which have previously been adsorbed to a stationary phase of a separation unit.

In the context of the present application, the term "fluid/solvent drive" (or pump device) may particularly denote an entity capable of driving a fluid (i.e. a liquid and/or a gas, optionally comprising solid particles), in particular the fluidic sample and/or the mobile phase. For instance, the fluid drive may be a pump (for instance embodied as piston pump or peristaltic pump) or another source of high pressure. For instance, the fluid drive may be a high-pressure pump, for example capable of driving a fluid with a pressure of at least 500 bar. Additionally or alternatively, a motion of the mobile phase can also be triggered by an electrostatic force. In a further embodiment, a metering device may be used as a pressurizing/pump device. In a further embodiment, a piezo device may be applied to generate a pressure change in the detector cell, eventually even to remove the bubble.

In the context of the present application, the term "sample separation unit" may particularly denote a fluidic member through which a fluidic sample is transferred and which is configured so that, upon conducting the fluidic sample through the separation unit, the fluidic sample will be separated into different groups of molecules or particles. An example for a separation unit is a liquid chromatography column which is capable of trapping or retarding and selectively releasing different fractions of the fluidic sample.

In the context of the present document, the term "bubble" may particular refer to a void filled with a fluid (e.g. a gas bubble, in particular an air bubble) that may be present within a fluid such as the liquid mobile phase and/or the fluidic sample to be analyzed. The presence of such a bubble is normally not desired since it may lead to several drawbacks (see above) in the analytical device performance. Further, the highly precise instrumentation may be damaged by the bubble(s).

In the context of the present document, the term "flow/pressure signal" may in particular refer to a signal associated with providing and/or changing a flow/pressure over time. In an example, a pressure signal may be generated by a pressurizing device such as a pump or a metering device. Yet, in another example, a pressure signal may be generated by opening/closing a valve or by connecting/disconnecting a fluid path. In another example, the pressure signal may be provided via a bypass. In a basic embodiment, a pressure signal may comprise a (short) increase of pressure like a pressure pulse. In a further embodiment, a pressure signal may comprise a (continuous) pressure change over time, e.g. changing in a periodical manner. The pressure signal may result from a flow signal as a consequence of restriction.

In a preferred embodiment, a pressure signal may comprise a periodic pressure change, e.g. a sequence of pressure signals/pulses. These signals may be identical (e.g. same length, same intensity) or different. In an example, a pressure signal is generated in the fluid path in which the bubble to be detected is located. In this manner, the pattern of the pressure signal may be imprinted on the bubble, causing contraction and expansion of the bubble. In an example, the pressure signal can be detected by a pressure sensor, e.g. in bar. In another example, the flow/pressure signal may be detected by a flow (rate) sensor, e.g. in volume/time units (such as mL/minute).

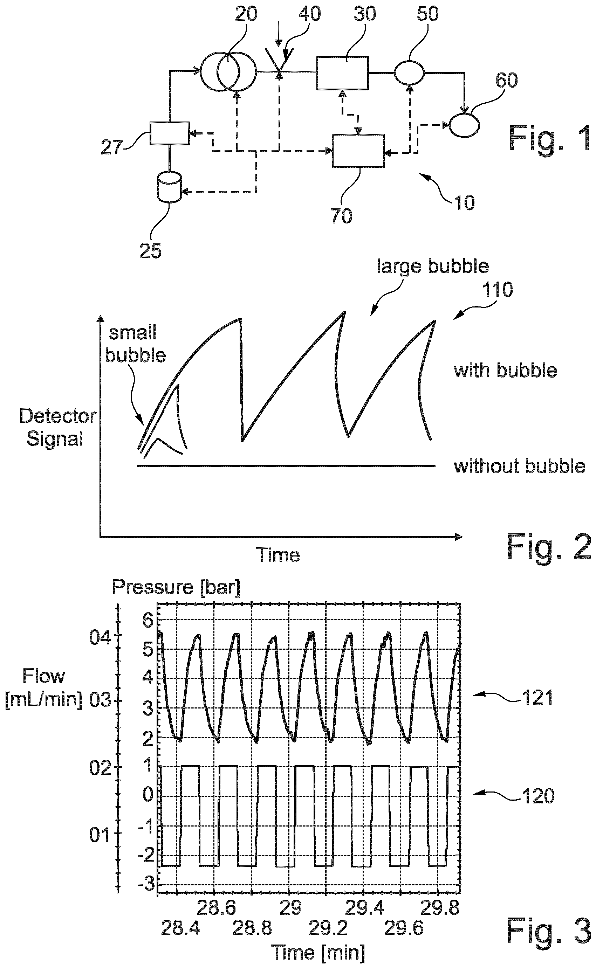

In the context of the present document, the term "electromagnetic signal" may in particular refer to a signal detected by an electromagnetic signal detector, for example a UV(-vis) detector or a fluorescence detector, of an analytical device. In an example, electromagnetic radiation (e.g. (UV-) light) may be provided to a sample (e.g. a fluidic sample in a mobile phase) in the detector flow cell. Then, for example the absorption, reflection, scattering or fluorescence of the sample may be measured as said electromagnetic signal by the electromagnetic signal detector. An electromagnetic signal may for example be detected in such a measurement as a peak or a plurality of peaks in a diagram that shows detector signal intensity vs. time (see e.g. Figure 2). In an embodiment, the electromagnetic signal may be measured in response to the above described pressure signal. In an embodiment, a bubble may adapt the pressure pattern of the pressure signal, so that a detected electromagnetic signal associated with the bubble may display a comparable pattern, thereby enabling detection of the presence of the bubble. In an example, the electromagnetic signal may comprise a single pulse, in a further example, the electromagnetic signal may comprise a sequence of signals/pulses, e.g. the same pattern as the pressure signal.

According to an exemplary embodiment, the disclosure may be based on the idea that the presence of a bubble in a fluid path (in an analytical device) can be detected in an efficient and reliable manner, when a pressure signal (e.g. a sequence of pressure pluses) is provided to the fluid path, and then, an electromagnetic signal is detected, based on which the presence of the bubble can be determined. In this regard, it has been surprisingly found by the inventors, that a bubble in the fluid path (in particular in a detector flow cell) responds to a provided pressure signal with contractions and expansions that can be measured based on the electromagnetic signal detection. In this manner, an especially efficient and reliable approach may be provided for bubble detection "on the fly". Here, it has been found that a bubble may cause large amounts of scattered, refracted and reflected light which yields strong signals (in particular in fluorescence detection).

In an embodiment, a pressure signal (e.g. a pressure square wave) is applied to the fluid path by means of a pressurizing device (e.g. the pump). The gas bubble responds with a rhythmic contraction and expansion at the same base frequency as the pressure signal (pressure square wave). The presence of such a behavior may be determined by the electromagnetic signal measurement. The obtained electromagnetic signal may in particular contain a frequency component at the pressure (square wave) base frequency and its multiples. Hence, an especially efficient evaluation of the electromagnetic signal may be done in the frequency domain. The electromagnetic signal may also be evaluated in the time domain by appropriate filtering or processing algorithms such as the Goertzel algorithm.

The present disclosure may be directly implemented into existing analytical devices (such as HPLC) in a straightforward manner. For example, the pump and the detector already existing in an HPLC may be directly applied. Thus, in an example, the present disclosure may be implemented as software only for established systems. Yet, in another example, the hardware may be configured especially for the present disclosure.

### EXEMPLARY EMBODIMENTS

In an embodiment, the electromagnetic signal is detected at a detector (in particular an electromagnetic signal detector) of the analytical device. The actual detector may be a typical analytic device (in particular HPLC) detector, for example a fluorescence detector, a UV/Vis detector, a conductivity detector, a refraction index detector, a diode array detector, an electrochemical detector, etc. This may provide the advantage that no additional hardware/detector is needed, so that costs and efforts may be saved. In fact, an electromagnetic signal detector already present in the analytical device may be directly applied, (essentially) without further efforts. Besides the actual detector functionality, such a detector may be configured as a flow cell with a detection volume through which the flow path may be streamed. Since the bubble may be present in said flow path, the detector may be arranged (without further efforts) directly at the location where it is needed.

In an embodiment, the bubble is located in a detection volume. In particular, a bubble deep in the flow path may be very difficult to detect by other methods and may have only little or no influence on the signal of the (pump) pressure sensor.

In an embodiment, the method comprises: generating the pressure signal by a pressurizing device (in particular a pressurizing device of the analytical device, more in particular an analytical pump or a metering device). In a further example, the source for generating the pressure signal may also be external (e.g. pressurized air conduit connected to the instrument via an electromechanical valve) or installed on another device. This may provide the advantage that the pressure signal may be directly provided by existing and established measures, thereby saving costs and further efforts. In a preferred example, the detector and pump already present in the analytical device may be applied for bubble detection without further efforts. A modulation of pressure may allow to separate from static sources of unwanted or unusually high intensities (e.g. surface contamination, sticking particles, cracks, light leaks, etc.).

In an embodiment, the bubble is a gas bubble, in particular an air bubble. Such a bubble may (often) occur in the context of analytical device such as HPLCs. In an embodiment, the bubble is located in a liquid solvent in the fluid path of the analytical device. Detecting the presence of a bubble in the liquid solvent (in particular the mobile phase, e.g. methanol) may significantly improve the analysis result.

In an embodiment, the method further comprising: processing the detected electromagnetic signal, in particular by at least one of the analytical device, a processing/computing device for controlling the analytical device, an external processing/computing device. There are a large variety of signal processing approaches established and may be applied depending on the desired result. Thereby, the bubble detection may be further improved and/or adapted to specific applications. In a specific example, the electromagnetic signal may be transformed from the time domain to the frequency domain.

In an embodiment, the processing comprises: transforming the detected electromagnetic signal from a time domain to a frequency domain, in particular using (Fast) Fourier transformation. This may provide the advantage that another kind of spectrum is produced that pronounces features potentially not pronounced/visible/detectable in a time spectrum. In particular, frequency components (such as a similar base frequency of pressure signal and electromagnetic signal) of a signal may be identified in a frequency spectrum. Such a transformation may include for example DFT, FFT, Goertzel, Correlation, etc. Modulation at known frequency may isolate the effects from other, uncorrelated sources of noise (e.g. particles, random fluctuations, electric noise, etc.). A main advantage may be seen in that the modulation becomes independent of the DC component and hence the measurement more robust. In an example, the DC component is not predictable and not time invariant.

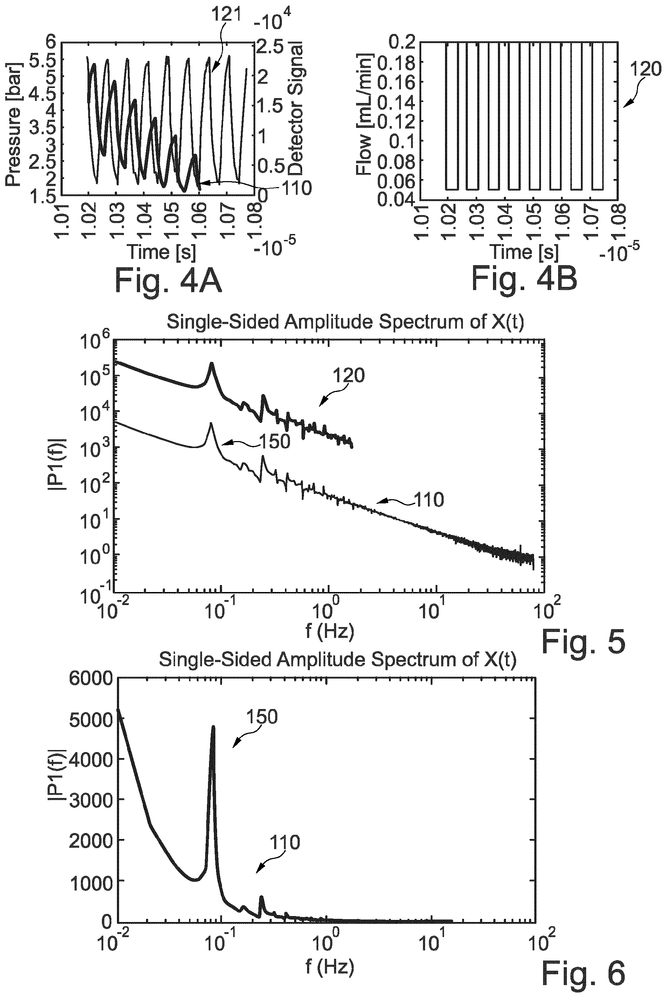

In an embodiment, at least one peak in the frequency domain corresponds to the bubble (see e.g. Figures 5 and 6). This may provide the advantage that this frequency component may be directly identified from the spectrum, enabling a clear, fast, and reliable detection of a bubble.

In an embodiment, the pressure signal changes over time. In an embodiment, the pressure signal is at least partially periodical. In an embodiment, the pressure signal is at least partially not continuous. In a basic embodiment, the pressure signal may comprise one pulse. In a more sophisticated embodiment, the pressure signal may be a continuous/periodical signal, e.g. a series of pulses. Depending on the complexity of the pressure signal, a more reliable bubble detection may be provided.

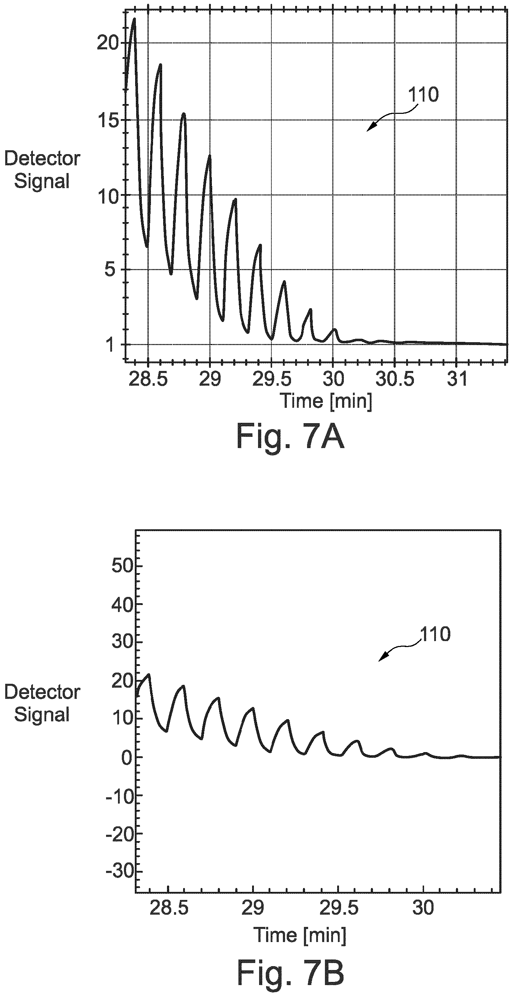

In an embodiment, the method further comprises: removing the detected bubble from the analytical device (see e.g. Figures 7A and 7B). Removing a bubble from the flow path may be done for example by at least one of streaming a fluid with a high flow rate through the fluid path, using a fluid for modifying the surface tension in the fluid path, adjusting the temperature in the fluid path. Based on the detected presence of a bubble, the bubble may be removed in a subsequent step to thereby increase the detection quality. Established and reliable methods may be applied to (in particular continuously) remove the bubble(s) from the flow path (and the analytical device).

In an embodiment, the method further comprises: characterizing at least one property, in particular size and/or location, of the detected bubble using the detected electromagnetic signal, in particular continuously, periodically, or sporadically. In the first place, the present disclosure describes an approach to detect (and confirm) the presence of the bubble. Yet, the present disclosure may also be applied to receive more information about properties of the bubble (e.g. estimate the size of the bubble).

In an embodiment, the fluid path is arranged between an analytical pump and the detector of the analytical device. In an embodiment, the fluidic path extends at least partially through the (flow cell) detector (volume) of the analytical device. Such a flow path is typical for an analytical device such as an HPLC (compare e.g. Figure 1).

In an embodiment, the bubble responds with a contraction and expansion, in particular rhythmically, to the pressure signal, in particular at the same base frequency. The inventors have found that a bubble in a flow path indeed reacts in this manner to a provided pressure signal. The imprint of the pressure signal on the bubble is then detectable based on an electromagnetic signal measurement.

In an embodiment, providing the pressure signal further comprises: modulating a piston movement, in particular a piston speed. In an embodiment, providing the pressure signal further comprises controlling opening/closing of a valve connected to a pressure source. In an embodiment, providing the pressure signal further comprises controlling connection/disconnection of the flow path to the pressure source. Thus, there can be many options of how to implement the provision of the pressure signal. In a preferred example, the provision of the pressure signal is already implemented in the analytical device, so that no additional efforts are necessary. Also, by controlling the opening and closing of a valve connected to a (constant) pressure source, a respective control of the connection and disconnection of the flow cell to the pressure source (e.g. by a valve) may be provided.

In an embodiment, the method further comprises: detecting the pressure signal using a pressure sensor. This may provide the advantage that the pressure signal may be controlled/regulated and/or compared with the detected electromagnetic signal. For such a detection, a pressure sensor already established in the analytical device may be applied. For example, a pressure sensor related to /associated with the (analytical) pump may be applied to monitor the pressure signals.

In an embodiment, the analytical device is configured as a sample separation device, in particular a fluidic chromatography device, more in particular a HPLC device.

In one embodiment, the sample separation device further comprises: a mixing point, where a sample is injected into the solvent, wherein the fluid compartment (the analytical device) is arranged upstream or downstream of the mixing point.

In one embodiment, the sample separation device further comprises: a solvent mixing point, where at least two solvent portions may be mixed, wherein the fluid compartment (the analytical device) is arranged upstream or downstream of the solvent mixing point.

In one embodiment, the sample separation device further comprises: a solvent drive, configured to drive the solvent as a mobile phase, wherein the fluid compartment (the analytical device) is arranged upstream or downstream of the solvent drive.

It becomes aware from the embodiments described directly above, that there is a high design flexibility regarding where the fluid compartment can be located in the analytical device/sample separation device. Depending on the present circumstances and the applied measurement method, different locations may be specifically favorable.

In one embodiment, the chromatography device comprises a mobile phase (solvent) drive and a separating device, wherein the mobile phase drive is configured for driving a mobile phase through the separating device, and the separating device is configured for chromatographically separating compounds of a sample fluid in the mobile phase.

In one embodiment, the analytical device and/or the sample separation device comprises a liquid chromatography system, wherein the sample fluid is a sample liquid, the mobile phase is comprised of one or more liquid solvents, and the separating device is a chromatographic column configured for separating compounds of the sample dissolved in the mobile phase.

In one embodiment, the chromatography device is a fluidic chromatography device, in particular a HPLC device.

Embodiments of the present disclosure might be embodied based on most conventionally available HPLC systems, such as the Agilent 1220, 1260 and 1290 Infinity LC Series (provided by the applicant Agilent Technologies).

The separating device preferably comprises a chromatographic column providing the stationary phase. The column might be a glass, metal, ceramic or a composite material tube (e.g. with a diameter from 50 µm to 5 mm and a length of 1 cm to 1 m) or a microfluidic column (as disclosed e.g. in EP 1577012 A1 or the Agilent 1200 Series HPLC-Chip/MS System provided by the applicant Agilent Technologies). The individual components are retained by the stationary phase differently and separate from each other while they are propagating at different speeds through the column with the eluent. At the end of the column, they elute at least partly separated from each other. During the entire chromatography process the eluent might be also collected in a series of fractions. The stationary phase or adsorbent in column chromatography usually is a solid material. The most common stationary phase for column chromatography is silica gel, followed by alumina.

The mobile phase (or eluent) can be either a pure solvent or a mixture of different solvents. It can also contain additives, i.e. be a solution of the said additives in a solvent or a mixture of solvents. It can be chosen e.g. to adjust the retention of the compounds of interest and/or the amount of mobile phase to run the chromatography. The mobile phase can also be chosen so that the different compounds can be separated effectively. The mobile phase might comprise an organic solvent like e.g. methanol or acetonitrile, often diluted with water. For gradient operation water and organic solvent is delivered in separate containers, from which the gradient pump delivers a programmed blend to the system. Other commonly used solvents may be isopropanol, THF, hexane, ethanol and/or any combination thereof or any combination of these with aforementioned solvents.

The sample fluid might comprise any type of process liquid, natural sample like juice, body fluids like plasma or it may be the result of a reaction like from a fermentation broth, bio reactor, digestion, or other type of sample preparation.

The fluid is preferably a liquid but may also be or comprise a gas and/or a supercritical fluid (as e.g. used in supercritical fluid chromatography - SFC - as disclosed e.g. in US 4,982,597 A).

The pressure in the mobile phase might range from 2-200 MPa (20 to 2000 bar), in particular 10-150 MPa (100 to 1500 bar), and more particular 50-130 MPa (500 to 1300 bar).

The HPLC system might further comprise a detector for detecting separated compounds of the sample fluid, a fractionating unit for outputting separated compounds of the sample fluid, or any combination thereof. Further details of HPLC system are disclosed with respect to the aforementioned Agilent HPLC series, provided by the applicant Agilent Technologies.

In an exemplary embodiment, an aspect of the present disclosure may be seen in detecting whether there is a (stationary) air bubble (within the mobile phase) at the location of optical detection, namely the flow cell. A certain pressure pattern (e.g. square wave) is applied by the (chromatography) pump, and the air bubble responds with a rhythmic contraction and expansion at the same base frequency of the pressure pattern, which can then be optically detected. The signal from such air bubble is significantly stronger than from any other source, thus allowing to clearly drop back on and existence of such air bubble at the location of optical detection.

In an exemplary embodiment, the method comprises: generating a frequency pattern (by the chromatographic pump), providing optical detection in the detector (flow cell), and providing a frequency analysis of the optical detection signal in order to detect air bubbles in the liquid.

In an exemplary embodiment, there is described a method to detect gas bubbles in the detection volume of LC flow cells, especially but not limited to fluorescence detectors. A pressure square wave is applied to the system by means of the pump. The air bubble responds with a rhythmic contraction and expansion at the same base frequency as the pressure square wave. The earlier mentioned effects may module the detected intensity. The signal contains a component at the pressure square wave base frequency and its multiples. Evaluation of the signal by frequency and amplitude (DFT, FFT, Goertzel, Correlation...) and discrimination by means of thresholds or patterns may be further implemented.

In an embodiment, the method can be used as a system diagnostic procedure. The method may be carried out automatically, e.g. as part of a startup procedure or a system health check or similar.

In an embodiment, the signal may be processed automatically and the detection of the condition (bubble/no bubble; large/small bubble etc.) can also be done automatically, e.g. by pattern recognition. This especially in conjunction with an artificial intelligence/machine learning model. Automatic condition detection may apply as well to the process of removing the detected bubble.

On determining the detected bubble or a sufficient portion of it has been removed, the system may automatically start, continue or repeat an operation such as the analysis of a sample.

In an embodiment, a user/operator may be automatically informed about a detected bubble (e.g. warning in the software/system display, push message, e-mail, call, etc.). Through the same channels, a user can be informed about the success or failure of the bubble removal measurement.

In an embodiment, it may also be conceivable for the system to decide on the measure, e.g. for removing the bubble, on its own or to try out several of the possibilities (flow rate, solvent composition, temperature, etc.) one after the other or in combination. Feedback with the signal analysis may be used to initiate further measurements. Additionally or alternatively, various possible solutions may be presented to the user, and he selects none, one, or more.

### BRIEF DESCRIPTION OF DRAWINGS

Other objects and many of the attendant advantages of embodiments of the present disclosure will be readily appreciated and become better understood by reference to the following more detailed description of embodiments in connection with the accompanied drawings. Features that are substantially or functionally equal or similar will be referred to by the same reference signs.
Figure 1 illustrates an analytical device implemented as a liquid chromatography device, according to an exemplary embodiment.
Figure 2 illustrates electromagnetic signals with and without the presence of a bubble, according to an exemplary embodiment.
Figure 3 illustrates pressure signals detected by a pressure detector and a flow detector, according to an exemplary embodiment.
Figures 4A and 4B illustrate a comparison of electromagnetic signals and pressure signals, according to an exemplary embodiment.
Figure 5 illustrates the electromagnetic signals and the pressure signals in the frequency domain with the presence of a bubble, according to an exemplary embodiment.
Figure 6 illustrates the electromagnetic signals in the frequency domain with the presence of a bubble in different manner, according to an exemplary embodiment.
Figures 7A and 7B illustrate the electromagnetic signals, when a bubble is removed from the flow path, according to an exemplary embodiment.

### DETAILED DESCRIPTION OF DRAWINGS

Referring now in greater detail to the drawings, **Figure 1** depicts a general schematic of an analytical device 10, implemented here as a high performance liquid chromatography (HPLC) device. A solvent drive 20 (such as a pump, can be used as a pressurizing device) receives a solvent as the mobile phase from a solvent supply 25. The solvent drive 20 drives the mobile phase through a separating device 30 (such as a chromatographic column), which can be seen here as the analytical domain of the device. A sample injector 40 (also referred to as sampler, sampling space, sample introduction apparatus, sample dispatcher, etc.) is provided between the solvent drive 20 and the separating device 30 in order to subject or add (often referred to as sample introduction) portions of one or more sample fluids into the flow of a mobile phase at a mixing point 45. The separating device 30 is adapted for separating compounds of the sample fluid, e.g. a liquid. A detector 50 is provided for detecting separated compounds of the sample fluid. A fractionating unit 60 can be provided for outputting separated compounds of sample fluid. In one embodiment, at least parts of the sample injector 40 and the fractionating unit 60 can be combined, e.g. in the sense that some common hardware is used as applied by both of the sample injector 40 and the fractionating unit 60.

The separating device 30 may comprise a stationary phase configured for separating compounds of the sample fluid. Alternatively, the separating device 30 may be based on a different separation principle (e.g. field flow fractionation).

While the mobile phase can comprise one solvent only, it may also be mixed of plurality of solvents (solvent supply 25). Such mixing might be a low pressure mixing and provided upstream of the solvent drive 20, so that the solvent drive 20 already receives and pumps the mixed solvents as the mobile phase. Alternatively, the solvent drive 20 might comprise plural individual pumping units, with plural of the pumping units each receiving and pumping a different solvent or mixture, so that the mixing of the mobile phase (as received by the separating device 30) occurs at high pressure and downstream of the mobile phase drive 20 (or as part thereof). The composition (mixture) of the mobile phase may be kept constant over time, the so-called isocratic mode, or varied over time, the so-called gradient mode.

A data processing device (control device) 70, which can be a conventional PC or workstation, might be coupled (as indicated by the dotted arrows) to one or more of the devices in the analytical device 10 in order to receive information and/or control operation.

A flow path can for example extend from the solvent drive 20 via the sample injection 40 and the separating device 30 (analytical domain) to the detector 50. Yet, the flow path can also extend through the detector 50 only. In the present example, the detector is configured as a flow cell comprising a detection volume through which a fluidic sample may be passed for detection by electromagnetic (optical) radiation. In a specific example, a flow cell may comprise an at least partially transparent body with a hollow interior space through which a fluidic sample may flow, wherein the fluidic sample may be electromagnetically/optically detected while passing the hollow interior space (flow path). In a specific example, the detector 50 is configured as a fluorescence detector, measuring the fluorescence of the sample fluid passing through the flow path in the flow cell. The presence of a bubble in said flow path may disturb a reliable detection result, so that there may be a need to efficiently detect the presence of such bubbles.

**Figure 2** illustrates electromagnetic signals 110 with and without the presence of a bubble 150, according to an exemplary embodiment. The Y-axis shows the signal intensity at the detector (e.g. fluorescence detector signal) in arbitrary units, while the X-axis shows the time (also in arbitrary units). A pressurizing device (here the analytical pump) provides a pressure signal, in the present case a periodic pressure signal, by controlling the piston of the pump in a specific manner. In the case that no bubble is present in the flow path, only a flat line (without bubble) as the electromagnetic signal will be detected, even though the pressure signal is provided by the pressurizing device.

However, in case a bubble is present (with bubble), a periodic electromagnetic signal 110 signal can be detected by the detector 50. Said electromagnetic signal 110 changes over time between a top position (high intensity) and a bottom position (low intensity) (here a saw-like shape, square wave). In other words: two exponential functions never reaching equilibrium state, e.g. the system acts like a first order low pass being driven by a fast square wave. It is schematically shown that small bubbles may lead to only small electromagnetic signals 110, while a large bubble may lead to large electromagnetic signals 110.

The presence of the bubble in the flow path can be detected based on the electromagnetic signal 110 detected in response to providing the pressure signal by the pressurizing device. Specifically, this is because the bubble responds with a rhythmic contraction and expansion to the pressure signal, in particular at the same base frequency. In other words, the periodic pressure signal provided by the pump is transferred to the bubble, and the resulting periodic movement of the bubble is detected by the electromagnetic signal detector of the analytical device detector 50.

**Figure 3** illustrates pressure signals 120 detected by both, a pressure detector and a flow detector (of the analytical device 10), according to an exemplary embodiment. The pressure signal 120 is provided by moving the piston of the pump 20 of the analytical device 10, thereby producing a periodic pattern 121 (measured in bar by the pressure detector). A flow detector measures the flow in mL/min and the pressure signals 120 is predicted based on piston displacement in a digital scheme (such as 1 and 0).

**Figures 4A and 4B** illustrate a comparison of electromagnetic signals 110 and pressure signals 120, according to an exemplary embodiment.

**Figure 4A** shows an overlay of the pressure signal 121 (as detected by the pressure sensor in bar, e.g. based on the flowrate detected at the pump, see left side of Y-axis) and the electromagnetic signal 110 as detected by the electromagnetic radiation detector of the analytical device 10 (see right side of Y-axis). The X-axis shows the time (in seconds) for both signals 110, 121. Two circumstances can be observed: i) the periodic pattern of the electromagnetic signal 120 corresponds to the periodic pattern of the pressure signal 121, and ii) the electromagnetic signals 120 caused by the bubble becomes weaker over time (amplitude is lowered), thereby indicating that the bubble is removed gradually (not suddenly) from the flow path. In other words, the pump cycle is imprinted in the detector signal and the amplitude of the signal (probably) corresponds to the size of the bubble (remaining gas volume in cell).

**Figure 4B** shows the corresponding pressure signals 120 measured by a flow detector in mL/min (compare Figure 3).

**Figure 5** illustrates the electromagnetic signals 110 (as detected by the electromagnetic signal detector) and the pressure signals 120 (as detected by a flow detector), when transferred from the time domain (see Figures 3 and 4) to the frequency domain, according to an exemplary embodiment. In the present case, a Fast Fourier Transformation (FFT) has been applied, so that the X-axis now shows the frequency (in Hz), while the Y-axis shows the signal intensity. It can be seen that the signals fairly match each other. Accordingly, even minor features/variations of the pressure signal 120 might be observable in the detector signal 110. A large peak can be observed in the frequency domain which corresponds to the presence of a bubble 150. Said peak is observable in the pressure signal 120 anyway, but in the electromagnetic signal 110 only, when a bubble 150 is present. In the absence of a bubble 150, the electromagnetic signal 110 in the frequency domain would rather be a smooth line.

**Figure 6** illustrates the electromagnetic signals 110 in the frequency domain with the presence of a bubble 150 in different manner, according to an exemplary embodiment. In comparison to Figure 5, only the electromagnetic signal 110 is shown. The presence of the bubble 150 can be confirmed by the large peak (the existence of a (bubble) peak is carrying no unambiguous information). In other words, Figure 6 shows a transformation of the detector signal 110 into frequency domain and confirms the pump cycle is indeed imprinted in the detector signal 110: the prominent first peak of the trace corresponds to the pump cycle (1/12 s ~ 0.083 Hz).

**Figures 7A and 7B** illustrate the electromagnetic signals 110 as measured by the electromagnetic signal detector 50, when a bubble 150 is removed from the flow path, according to an exemplary embodiment. In both Figures, the X-axis shows the time (in minutes) and the Y-axis shows the detector signal intensity. Further, in both examples, a bubble 150 is continuously removed (e.g. by streaming with high speed). It can be clearly seen that the electromagnetic signal 110 (in response to the pressure signal 120) becomes continuously weaker over time (the signal is periodic, the decay not).

### Reference signs

- 10: Analytic device
- 20: Solvent drive
- 25: Solvent supply
- 30: Separating device
- 40: Sample injector
- 50: Detector
- 60: Fractionating unit
- 70: Data processing device, control device
- 110: Electromagnetic signal
- 120: Pressure signal, measured by detector
- 121: Pressure signal, in bar
- 150: Bubble

## Claims

1. A method for detecting a bubble (150) in an analytical device (10), the method comprising:
detecting in a fluid path an electromagnetic signal (110) in response to a provided flow/pressure signal (120); and
determining the presence of the bubble (150) in the fluid path based on the detected electromagnetic signal (110).

2. The method according to claim 1,
wherein the electromagnetic signal (110) is detected at a detector (50) of the analytical device (10), in particular a fluorescence detector.

3. The method according to one of the preceding claims, further comprising:
generating the pressure signal (110) by a pressurizing device (20), in particular a pressurizing device (20) of the analytical device (10), more in particular an analytical pump or a metering device.

4. The method according to one of the preceding claims,
wherein the bubble (150) is a gas bubble, in particular an air bubble; and/or
wherein the bubble (150) is located in a liquid solvent in the fluid path of the analytical device (10).

5. The method according to one of the preceding claims, further comprising:
processing the detected electromagnetic signal (110), in particular by at least one of the analytical device (10), a processing device for controlling the analytical device (10), an external processing device.

6. The method according to claim 5, wherein the processing comprises:
transforming the detected electromagnetic signal (110) from a time domain to a frequency domain, in particular using FT.

7. The method according to claim 6, wherein at least one peak in the frequency domain corresponds to the bubble (150).

8. The method according to one of the preceding claims, comprising at least one of the following features:
wherein the pressure signal (120) changes over time;
wherein the pressure signal (120) is at least partially periodical;
wherein the pressure signal (120) is at least partially not continuous.

9. The method according to one of the preceding claims, further comprising:
removing the detected bubble (150) from the analytical device (10), in particular by at least one of streaming a fluid with a high flow rate through the fluid path, using a fluid with specific properties, in particular for modifying the surface tension in the fluid path, adjusting the temperature in the fluid path.

10. The method according to one of the preceding claims, further comprising:
characterizing at least one property, in particular size and/or location, of the detected bubble (150) using the detected electromagnetic signal (110), in particular continuously, periodically, temporarily, or sporadically.

11. The method according to one of the preceding claims, comprising at least one of the following features:
wherein the fluidic path is arranged between an analytical pump (20) and the detector (50) of the analytical device (10);
wherein the fluidic path extends at least partially through the detector (50) of the analytical device (10);
wherein the method comprises: detecting the pressure signal (120) using a pressure sensor;
wherein the method comprises: detecting the flow using a flow sensor.

12. The method according to one of the preceding claims,
wherein the bubble (150) responds with a contraction and expansion, in particular rhythmically, to the pressure signal (120), in particular at the same base frequency.

13. The method according to one of the preceding claims,
wherein providing the pressure signal (120) further comprises:
modulating a piston movement, in particular a piston speed, and/or
controlling opening/closing of a valve connected to a pressure source; and/or
controlling connection/disconnection of the flow path to the pressure source.

14. A device, comprising:
a pressurizing device (20), in particular a pump or a metering device, configured to provide a pressure signal (120) to a fluid path;
an electromagnetic signal detector (50), configured to detect in the fluid path an electromagnetic signal (110) in response to the provided flow/pressure signal (120); and
a control device (70), configured to determine the presence of a bubble (150) in the fluid path based on the detected electromagnetic signal (110).

15. An analytical device (10), comprising:
the device according to claim 14; and
an analytic domain, in particular a chromatographic domain, coupled to the device (100) and configured to analyze a fluidic sample;
In particular wherein the analytical device (10) is configured as a sample separation device (10), in particular a fluidic chromatography device, more in particular a high-performance liquid chromatography, HPLC, device.
